Europäisches Patentamt

European Patent Office

Office européen des brevets

(11) Publication number: **0 085 846**
**B1**

## EUROPEAN PATENT SPECIFICATION

(45) Date of publication of patent specification: **06.04.88**

(21) Application number: **83100301.7**

(22) Date of filing: **14.01.83**

(51) Int. Cl.⁴: **F 24 J 2/38,** F 24 J 2/50,
H 01 Q 1/42

(54) **Solar energy collection apparatus.**

(30) Priority: **26.01.82 JP 10680/82**

(43) Date of publication of application:
**17.08.83 Bulletin 83/33**

(45) Publication of the grant of the patent:
**06.04.88 Bulletin 88/14**

(84) Designated Contracting States:
**CH DE FR GB IT LI SE**

(56) References cited:
**EP-A-0 043 082**
**DE-A-2 830 516**

**Patent Abstracts of Japan, vol. 5, no. 105, 8
July 1981**

**Patent Abstracts of Japan, vol. 5, no. 143, 9
September 1981**

**Encyclopedia Britannica, Mycropedia, W1IV, p
475**

(73) Proprietor: **Mori, Kei
3-16-3-501, Kaminoge
Setagaya-ku Tokyo (JP)**

(72) Inventor: **Mori, Kei
3-16-3-501, Kaminoge
Setagaya-ku Tokyo (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

## Description

The invention relates to a solar ray collection apparatus with a housing or capsule and with solar ray collector means for collecting the solar rays, said means being installed within the capsule and including a plurality of lenses, said lenses defining a light receiving surface following the sun by means of movement about two axes controlled by a photodetector.

Such a solar ray energy collection apparatus is known from EP—A—00 43 082.

This apparatus comprises a plurality of Fresnel lenses and focusing members to collect sun beams onto the entrance of optical conductors. In order to protect the solar collector from wind, rain, dust and other undesirable surrounding conditions, the solar ray collector is mounted within a spherical housing or capsule. Especially, however, when the solar ray collector is bulky, it is difficult to form such a unitary large transparent capsule.

However, in this prior art it is not ensured that all the solar rays which are allowed to penetrate the capsule are collected by the light receiving surface. So light may penetrate into the capsule which is not collected by the receiving surface and which would lead to warm-up effects within the capsule which affect the dimensions and, therefore, the proper working of the apparatus.

It is the task of the present invention to provide an apparatus of the type above, the capsule of which can be constructed and which allows to effectively collect all the solar rays, penetrating into the capsule.

This task is solved with a solar apparatus of the type above, which is characterized therein that the housing or capsule is made up of a number of interconnected transparent members, the inclination angles of said transparent members which lie within a region confined by imaginary lines which extend perpendicularly from the peripheral edge of the light receiving surface are chosen so that solar rays falling onto the light receiving surface in the direction parallel to said imaginary lines are allowed to penetrate the capsule, whereas the inclination of transparent members which lie outside said region are chosen so that solar rays in said direction parallel to said imaginary lines are totally reflected.

In principle, it is known (e.g. by the DE—OS 2 830 516 or by the New Encylopedia Britannica, Micropedia, Vol. IV, page 475) to use coverings which are constructed by combining single elements to form a self-carrying structure. In the DE—OS 28 30 516, such a covering is used for covering an aerial. However, in this document, the problems which may arise by constructing a solar ray energy collecting apparatus, especially with respect to the warm-up effects, is not mentioned in this document.

With the features of the claim 1, the invention uses the inclination angle of the single light transmitting elements for blocking out that light which would not fall onto the light receiving surface. On the other hand, all light which is not blocked out by total reflection at the transparent members is collected by the light receiving surface, so that the warm-up effects may be kept small.

A photodetector always senses the position of the sun and allows to control the position of the apparatus accordingly.

Preferred embodiments are disclosed in the subclaims.

Brief Description of the Drawings

Fig. 1 is a schematic front view of a solar energy collection apparatus embodying the present invention;

Fig. 2 is a perspective view of the apparatus shown in Fig. 1 with its capsule removed;

Fig. 3 is a sectional of the apparatus shown in Fig. 1;

Figs. 4 and 5 are sections showing other embodiments of the present invention; and

Figs. 6 and 7 are perspective views of other different embodiments of the present invention.

Description of the Preferred Embodiments

While the solar energy collection apparatus of the present invention is susceptible of numerous physical embodiments, depending upon the environment and requirements of use, substantial numbers of the herein shown and described embodiments have been made, tested and used, and all have performed in an eminently satisfactory manner.

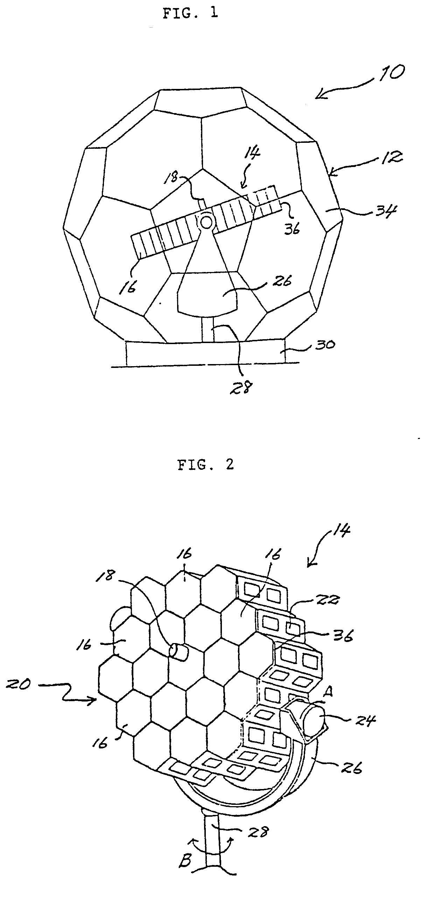

Referring to Figs. 1 and 2 of the drawings, a solar energy collection apparatus of the present invention is shown and generally designated by the reference numeral 10. The apparatus 10 comprises a generally spherical transparent housing or capsule 12 and a solar ray collector 14 installed in the capsule 12. The solar ray collector 14 includes a number of, such as nineteen, lenses 16 adapted to converge the solar rays into photothermal or photoelectric converters (not shown) which are respectively located at the focal points of the lenses 16. A photodetector 18 is positioned at the center of a generally circular light receiving surface 20 which is defined by the lenses 16. The lenses 16 and photodetector 18 are integrally bundled up by a support frame or lens frame 22. A first drive unit such as a motor 24 drives the lens assembly in a direction indicated by an arrow A in Fig. 2. The lens assembly and motor 24 are integrally supported by a generally C-shaped arm 26 which is rigidly mounted on a rotary shaft 28. This shaft 28 extends perpendicular to the axis of rotation of the motor 24 and is driven in a direction indicated by an arrow B by a second drive unit such as a motor (not shown). The photodetector 18 senses a position of the sun at any time. The first and second motors are controlled in response to an output of the photodetector 18 such that the light receiving surface 20 of the lens assembly 16 constantly follows the sun. The solar rays are converged by the lenses 16 into their associated photothermal or photo-

2

electric converters to be thereby transformed into thermal or electric energy. If desired, optical cables may be so located as to receive the converged sunlight at the focal points of the respective lenses 16 and transmit it to any desired location for a desired application.

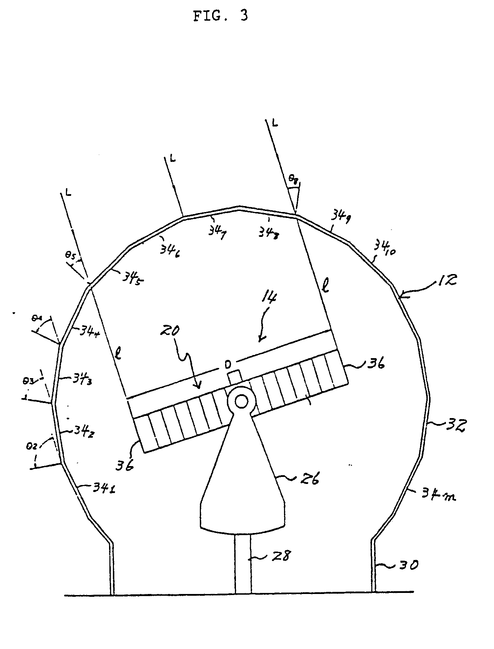

As best shown in Fig. 3, the capsule 12 comprises a generally cylindrical base section 30 and a generally spherical or dome-shaped section 32 which emerges from the top of the base section 30. The dome 32 is made up of a plurality of interconnected pentagonal and hexagonal transparent plates $34_1$, $34_2$ ... $34_m$. The solar ray collector 14 is controlled to constantly face the sun at the light receiving surface 20 thereof, as previously described. Hence, when the solar rays are incident on the capsule 12 in the direction L as shown in Fig. 3, the incidence angle $\theta_2$ on the plate $34_2$, for example, is so large that the sunlight is not introduced into the capsule 12 but totally reflected by the plate $34_2$. Still, the incidence angle $\theta_3$ on the adjacent plate $34_2$ is smaller than the incidence angle $\theta_3$ and the incidence angle $\theta_4$ is even smaller than the incidence angle $\theta_3$. Therefore, at a certain incidence angle smaller than $\theta_2$, the sunlight is allowed to penetrate the capsule 12. It follows that the installation of the solar ray collector 14 will be most effective when its diameter D is so designed as to locate the peripheral edge 36 of the light receiving surface 20 at the position which the light of the specific incidence angle smaller than $\theta_2$ reaches. Stated another way, the most effective design of the capsule 12 will be such that supposing lines l which extend from the peripheral edge 36 perpendicularly to the light receiving surface 20, the plates $34_5$ and $34_8$ intersecting the lines l are inclined by angles $\theta_5$ and $\theta_8$ which have the maximum value within the allowable range for the penetration of the solar rays into the capsule 12.

With the above arrangement, the solar ray collector 14 inside the capsule 12 can collect the solar rays or energy in its most efficient manner.

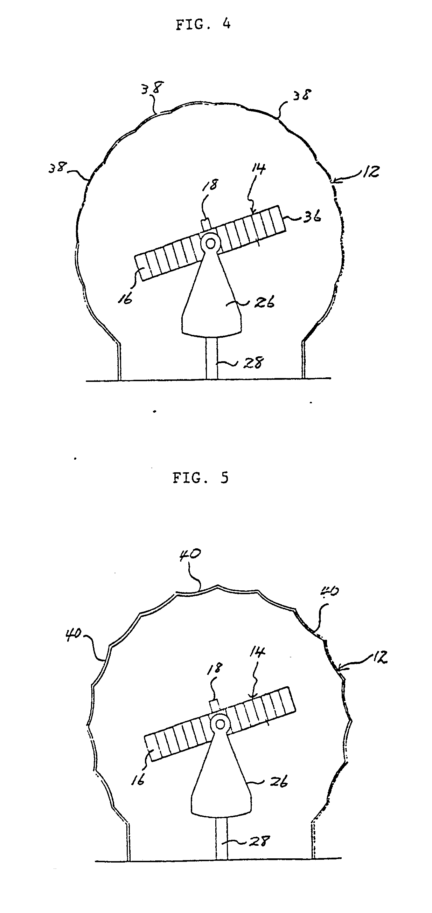

Referring to Fig. 4, another embodiment of the present invention is shown which is essentially similar to the first embodiment but different in the profile of the transparent plates of the capsule 12. In contrast to the flat profile of the plates 34, the plates 38 shown in Fig. 4 are individually formed slightly convex toward the outside. It will be seen that such a shape of the transparent plates 38 increases the mechanical strength of the capsule 12 and, therefore, permits the plates 38 to be formed thinner than the plates 34. Alternatively, the capsule 12 may be made up of transparent plates shown in Fig. 5 which are individually formed somewhat concave toward the outside. The capsule shown in Fig. 5 will provide particularly resistant to wind.

Apart from the described combination of pentagon and hexagon, the transparent plates may have any other suitable configuration in principle, such as triangle, circle, quadrangle, pentagon, hexagon, trapezoid and banana-shape or a combination thereof. Still, the combined pentagonal and hexagonal plates can be effectively interconnected without any gap to enhance the resistivity of the resulting capsule 12 to wind.

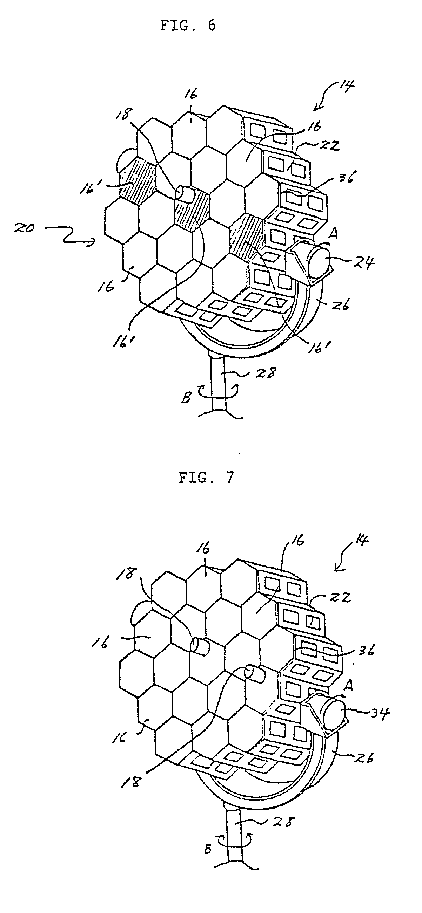

Referring to Fig. 6, another embodiment of the present invention is shown which is similar to the construction shown in Fig. 2 but features a unique lens arrangement. Of the lenses 16 shown in Fig. 6, the lenses 16' intersecting the axis of rotation of the motor 24 have a profile which resembles a convex lens. With this arrangement, the focal point of each lens 16' is prevented from intersecting the axis of rotation of the motor 24.

Referring to Fig. 7, still another embodiment of the present invention is shown which includes a plurality of photodetectors 18. While the single photodetector 18 in the foregoing embodiments will fail to properly operate when the joint between adjacent transparent plates of the capsule 12 becomes located just thereabove, either one of the photosensors 18 shown in Fig. 7 will always and accurately sense the sun even when the other fails in the situation mentioned above.

In summary, it will be seen that the present invention provides a large-sized solar energy collection apparatus which efficiently collects the solar energy despite the use of a capsule which is formed by numerous plates. Additionally a capsule of the apparatus is resistive to wind and excellent in mechanical strength.

The entire light receiving surface 20 of the lens assembly may be provided with a generally hemispherical configuration. The photodetector 18 may be replaced by a sun following unit located outside the capsule 12 and constructed to drive the solar ray collector 14 with its output.

**Claims**

1. A solar ray collection apparatus (10) with a housing or capsule (12) and with solar ray collector means (14) for collecting the solar rays, said means being installed within the capsule (12) and including a plurality of lenses (16), said lenses defining a light receiving surface following the sun by means of movement about two axes controlled by a photodetector, characterized in that the housing or capsule (12) is made up of a number of interconnected transparent members ($34_1$ to $34_m$, 38, 40), the inclination angles of said transparent members which lie within a region confined by imaginary lines (l) which extend perpendicularly from the peripheral edge (36) of the light receiving surface are chosen so that solar rays falling onto the light receiving surface in the direction parallel to said imaginary lines (l) are allowed to penetrate the capsule (12), whereas the inclination of transparent members which lie outside said region are chosen so that solar rays in said direction parallel to said imaginary lines are totally reflected.

2. Apparatus as claimed in claim 1, characterized in that each of the transparent members (38) of the capsule (12) is formed convex towards the outside.

3. Apparatus as claimed in claim 1, characterized in that each of the transparent members (40) of the capsule (12) is formed concave towards the outside.

4. Apparatus as claimed in claim 2 or 3, characterized in that the transparent members (38, 40) comprise the combination of pentagonal and hexagonal transparent members.

5. Apparatus as claimed in claim 4, characterized in that the light receiving surface (20) of the solar ray collector means (14) is formed flat.

6. Apparatus as claimed in claim 1, characterized in that the solar ray collector means (14) has an axis for rotation about which the light receiving surface (20) is inclinable and for preventing an intersection of the focal points of the lenses (16') situated on the line extending from said axis towards the sun, said lenses (16') having a profile which resembles the profile of a convex lens.

7. Apparatus as claimed in claim 4, characterized in that the light receiving surface (20) of the solar ray collector (14) has a generally hemispherical configuration.

8. Apparatus as claimed in claim 1, characterized in that the photodetector (18) is located outside the capsule (12).

9. Apparatus as claimed in claim 1, characterized in that the photodetector (18) is positioned inside the capsule (12).

**Patentansprüche**

1. Sonnenenergie-Sammelvorrichtung (10) mit einem Gehäuse oder einer Kapsel (12) und mit einem Sonnenkollektor (14) zum Einfangen von Sonnenstrahlung, wobei der Kollektor innerhalb der Kapsel (12) angeordnet ist und eine Vielzahl von Linsen (16) aufweist, die eine Lichtempfangsfläche, bilden, wobei diese Fläche durch eine Bewegung um zwei Achsen, die über einen Fotodetektor gesteuert wird, der Sonne folgt, dadurch gekennzeichnet, daß das Gehäuse oder die Kapsel (12) aus einer Anzahl von miteinander verbundenen, durchsichtigen Elementen ($34_1$, $34_m$, 38, 40) besteht, wobei die Neigungswinkel der durchsichtigen Elemente, die innerhalb eines Bereichs liegen, der durch imaginäre Linien (I), die sich senkrecht zu den Umfangskanten (36) der Licht empfangenden Fläche erstrecken, so gewählt sind, daß die Sonnenstrahlen, die auf die Lichtempfangsfläche in Richtung parallel zu diesen imaginären Linien (I) auftreffen, in die Kapsel (12) eintreten können, während die Neigung der durchsichtigen Elemente, die außerhalb dieses Bereichs liegen, so gewählt sind, daß Sonnenstrahlung, die parallel zu diesen imaginären Linien verläuft, total reflektiert wird.

2. Vorrichtung nach Anspruch 1, dadurch gekennzeichnet, daß jedes durchsichtige Element (38) der Kapsel (12) nach außen hin konvex ausgebildet ist.

3. Vorrichtung nach Anspruch 1, dadurch gekennzeichnet, daß jedes durchsichtige Element (40) der Kapsel (12) nach außen hin konkav ausgebildet ist.

4. Vorrichtung nach Anspruch 2 oder 3, dadurch gekennzeichnet, daß die durchsichtigen Elemente (38, 40) eine Kombination von fünfeckigen und sechseckigen durchsichtigen Elementen bilden.

5. Vorrichtung nach Anspruch 4, dadurch gekennzeichnet, daß die Licht empfangende Oberfläche (20) des Sonnenkollektors (14) flach ausgebildet ist.

6. Vorrichtung nach Anspruch 1, dadurch gekennzeichnet, daß der Sonnenkollektor (14) eine Drehachse aufweist, um die die Licht empfangende Oberfläche (20) drehbar ist und um eine Überschneidung der Fokuspunkte der Linsen (16'), die auf einer Linie liegen, die sich von dieser Achse zur Sonne erstreckt, überschneiden, wobei die Linsen (16') ein Profil haben, das demjenigen einer konvexen Linse entspricht.

7. Vorrichtung nach Anspruch 4, dadurch gekennzeichnet, daß die Licht empfangende Oberfläche (20) des Sonnenkollektors (14) eine Halbkugelform hat.

8. Vorrichtung nach Anspruch 1, dadurch gekennzeichnet, daß der Fotodetektor (18) außerhalb der Kapsel (12) angeordnet ist.

9. Vorrichtung nach Anspruch 1, dadurch gekennzeichnet, daß der Fotodetektor (18) innerhalb der Kapsel (12) angeordnet ist.

**Revendications**

1. Appareil (10) pour capter le rayonnement solaire, comprenant une enceinte ou capsule (12) et un dispositif capteur (14) pour le captage des rayons solaires, ce dispositif étant installé dans la capsule (12) et comportant des lentilles (16) définissant une surface réceptrice de lumière, laquelle suit le soleil par un mouvement autour de deux axes mouvement qui est contrôlé par une photodétecteur, caractérisé en ce que l'enceinte ou capsule (12) est constituée d'un certain nombre d'éléments transparents ($34_1$ à $34_m$, 38, 40) qui sont reliés entre eux et que les angles d'inclinaison des éléments transparents situés dans une région délimitée par des lignes imaginaires (I) qui s'étendent perpendiculairement à partir du bord périphérique (36) de la surface réceptrice de lumière, sont choisis de manière que les rayons solaires tombant sur la surface réceptrice de lumière suivant une direction parallèle à ces lignes imaginaires (I), soient permis de pénétrer dans la capsule (12), tandis que les angles d'inclinaison des éléments transparents, situés en dehors de cette région sont choisis de manière que les rayons solaires arrivant suivant ladite direction parallèle aux lignes imaginaires soient réfléchis totalement.

2. Appareil selon la revendication 1, caractérisé en ce que chacun des éléments transparents (38) de la capsule (12) possède une forme convexe dirigée vers l'extérieur.

3. Appareil selon la revendication 1, caractérisé en ce que chacun des éléments transparents (40) de la capsule (12) possède une forme concave dirigée vers l'extérieur.

4. Appareil selon la revendication 2 ou 3, caractérisé en ce que les éléments transparents (38, 40) forment une combinaison d'éléments pentagonaux et d'éléments hexagonaux.

5. Appareil selon la revendication 4, caractérisé en ce que la surface réceptrice de lumière (20) du dispositif capteur (14) est plane.

6. Appareil selon la revendication 1, caractérisé en ce que le dispositif capteur (14) possède un axe de rotation, autour duquel la surface réceptrice de lumière (20) est inclinable, et que les lentilles (16') situées sur la ligne se trouvant entre ledit axe et le soleil, possèdent un profil qui ressemble au profil d'une lentille convexe, afin d'éviter que les foyers de ces lentilles (16') coupent ledit axe de rotation.

7. Appareil selon la revendication 4, caractérisé en ce que la surface réceptrice de lumière (20) du capteur solaire (14) possède une configuration générale hémisphérique.

8. Appareil selon la revendication 1, caractérisé en ce que le photodétecteur (18) est situé à l'extérieur de la capsule (12).

9. Appareil selon la revendication 1, caractérisé en ce que le photodétecteur (18) est placé à l'intérieur de la capsule (12).

0 085 846

FIG. 1

FIG. 2

1

FIG. 3

FIG. 4

FIG. 5

FIG. 6

FIG. 7